# FASCICULE DE BREVET EUROPEEN

(11) **EP 4 007 020 B1**
(45) Date de publication et mention de la délivrance du brevet: **09.08.2023**
(21) Numéro de dépôt: 21209744.8
(22) Date de dépôt: 23.11.2021
(51) Int. Cl.: H01M 8/04089, H01M 8/04082, H01M 8/04223, H01M 8/04746

(54) **SYSTEME ELECTROCHIMIQUE COMPORTANT UNE PILE A COMBUSTIBLE, UNE VANNE DE PURGE, ET UN DETENDEUR DE REGULATION DE LA PRESSION D ENTREE**
ELEKTROCHEMISCHES SYSTEM, DAS EINE BRENNSTOFFZELLE, EIN SPÜLVENTIL UND EINEN DRUCKMINDERER ZUR REGULIERUNG DES EINLASSDRUCKS UMFASST
ELECTROCHEMICAL SYSTEM COMPRISING A FUEL CELL, A BLEED VALVE, AND A PRESSURE-REGULATING VALVE FOR CONTROLLING THE INPUT PRESSURE

(30) Priorité: 26.11.2020 FR 2012182
(43) Date de publication de la demande: 01.06.2022
(73) Titulaire: Commissariat à l'énergie atomique et aux énergies alternatives, 75015 Paris (FR)
(72) Inventeur: MORIN, Benoît, 38054 GRENOBLE Cedex 09 (FR); MARTIN, Pascal, 38054 GRENOBLE Cedex 09 (FR); SAUZEDDE, François, 38054 GRENOBLE Cedex 09 (FR)
(74) Mandataire: INNOV-GROUP

(56) Documents cités:
- EP-A1- 3 340 354
- US-A1- 2005 118 475
- US-A1- 2008 038 608

## Description

### DOMAINE TECHNIQUE

Le domaine de l'invention est celui des systèmes électrochimiques comportant au moins une pile à combustible, une vanne de purge, et un détendeur assurant une régulation de la pression d'un fluide d'alimentation à l'entrée de la pile à combustible.

### ÉTAT DE LA TECHNIQUE ANTÉRIEURE

Une pile à combustible comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

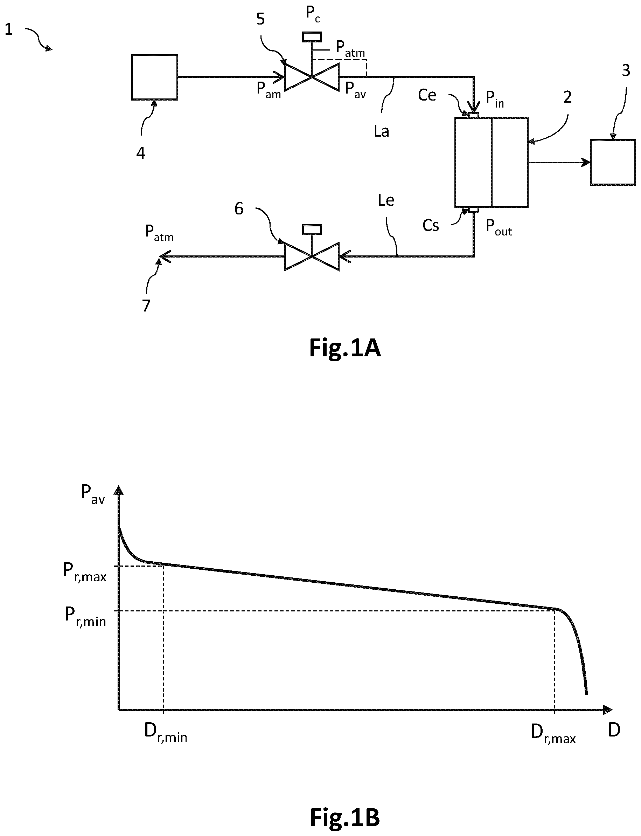

La figure 1A illustre, de manière schématique et partielle, un exemple d'un système électrochimique 1, ici dans une configuration dite en mode bouché (*dead end*, en anglais). Le système électrochimique 1 comporte ici une pile à combustible 2, dont le collecteur d'entrée anodique Ce est alimenté en hydrogène par une source d'hydrogène 4 via une ligne fluidique d'alimentation La. Un collecteur de sortie anodique Cs est relié à une sortie fluidique 7 par une ligne fluidique d'évacuation Le, sur laquelle est disposée une vanne de purge 6. De plus, un détenteur 5, disposé sur la ligne fluidique d'alimentation La, assure une régulation de la pression d'entrée Pᵢₙ de l'hydrogène à l'entrée de la pile à combustible 2. La source d'hydrogène 4 sous pression peut être associée à une réaction chimique, un réseau de distribution d'hydrogène, voire un réservoir d'hydrogène, entre autres.

Lors du fonctionnement en mode bouché, la ligne fluidique d'évacuation Le est obturée, ici par la vanne de purge 6. La pile à combustible 2 est alimentée en fluides réactifs avec un rapport stoechiométrique (rapport entre la quantité de réactif injecté et la quantité de réactif consommé) sensiblement égal à 1, en particulier ici en ce qui concerne l'hydrogène. Dans ce cas, les espèces non réactives et l'eau liquide produite ne sont pas évacuées, ce qui conduit à une augmentation progressive de leur concentration molaire du côté anodique de la pile à combustible 2. Il est alors nécessaire de procéder régulièrement à une étape de purge de l'anode de la pile à combustible 2, par ouverture de la vanne de purge 6, pour en évacuer les espèces non réactives et l'eau liquide.

Notons qu'une étape de purge peut également être nécessaire dans le cas où le système électrochimique 1 fonctionne en mode ouvert, et comporte pour cela une ligne fluidique de recirculation raccordée à la ligne fluidique d'alimentation par un éjecteur (non représenté). En effet, il importe également d'évacuer régulièrement les espèces non réactives dont la concentration molaire tend à augmenter lors de la recirculation fluidique.

Une régulation de la pression d'entrée Pᵢₙ d'au moins l'un des fluides d'alimentation, ici de l'hydrogène, peut être nécessaire pour éviter une dégradation prématurée des propriétés et/ou performances de la pile à combustible. En effet, à titre d'exemple, une variation de la puissance électrique fournie par la pile à combustible peut induire une augmentation ou une diminution de la pression d'hydrogène dans la pile à combustible, et donc former une différence de pression potentiellement importante de part et d'autre de la membrane électrolytique, ce qui peut conduire à une dégradation des propriétés de l'assemblage membrane électrodes.

Aussi, le détendeur 5, situé sur le ligne fluidique d'alimentation La, assure la régulation de la pression Pᵢₙ à l'entrée anodique de la pile à combustible. Pour cela, une pression de consigne P_{c} est fixée par le détendeur 5, de sorte que la pression d'entrée Pᵢₙ reste sensiblement égale à P_{c} (aux pertes de charge régulières près).

Cependant, il est connu qu'un détendeur présente une plage de régulation prédéfinie. A ce titre, la figure 1B illustre un exemple de courbe de débit d'un détenteur conventionnel. Le détendeur présente une plage centrale de régulation, dans laquelle la pression aval Pₐᵥ reste sensiblement constante sur une gamme importante de débit D. Ainsi, la pression aval Pₐᵥ restera sensiblement égale à la pression de consigne P_{c} lorsque celle-ci est comprise entre des valeurs minimale P_{r,min} et maximale P_{r,max}, tant que le débit molaire reste compris dans la gamme de débit [D_{r,min}; D_{r,max}].

Cependant, comme l'illustre la fig.1B, une courbe de débit d'un tel détendeur présente habituellement une zone de débit critique, c'est-à-dire une zone où la pression aval Pₐᵥ chute fortement lorsque le débit dépasse une valeur critique, ici la valeur D_{r,max}. Le détendeur n'est alors plus en capacité de réguler la pression, et se comporte alors comme une vanne totalement ouverte.

Or, lors d'une étape de purge, le débit molaire d'un fluide d'alimentation, ici de l'hydrogène, est fortement augmenté dans la ligne fluidique d'alimentation La, la pile à combustible, et la ligne fluidique d'évacuation Le, ceci pour évacuer efficacement l'eau liquide présente à l'anode ainsi que les espèces non réactives. Compte tenu de l'augmentation du débit molaire du fluide d'alimentation et du caractère non-linéaire du comportement du détendeur, la pression aval Pₐᵥ peut fortement diminuer, ce qui est susceptible d'entraîner une dégradation des propriétés et/ou performances de cette dernière.

On connaît par ailleurs les documents EP3340354A1, US2005/118475A1 et US2008/038608A1 qui décrivent des systèmes électrochimiques comportant une pile à combustible, un détendeur situé sur la ligne d'alimentation en hydrogène, et une vanne de purge.

### EXPOSÉ DE L'INVENTION

L'invention a pour objectif de remédier au moins en partie aux inconvénients de l'art antérieur, et plus particulièrement de proposer un système électrochimique comportant une pile à combustible, une vanne de purge et un détendeur de régulation de la pression d'entrée d'un fluide d'alimentation, qui réduise ou écarte, lors des étapes de purge, les risques de dégradation des propriétés et/ou performances de la pile à combustible.

Pour cela, l'objet de l'invention est un système électrochimique comportant : une pile à combustible, comportant un collecteur d'entrée et un collecteur de sortie adaptés à assurer un écoulement d'un fluide d'alimentation dans la pile à combustible ; une source dudit fluide d'alimentation, raccordé au collecteur d'entrée par une ligne fluidique d'alimentation ; une sortie fluidique, raccordée au collecteur de sortie par une ligne fluidique d'évacuation, et destinée à être portée à une pression de sortie constante ; un détendeur, disposé sur la ligne fluidique d'alimentation, adapté à réguler, en fonction d'une pression de consigne P_{c}, une pression aval Pₐᵥ du fluide d'alimentation en sortie du détendeur et donc une pression d'entrée du fluide d'alimentation dans la pile à combustible ; une vanne de purge, disposée sur la ligne fluidique d'évacuation entre le collecteur de sortie et la sortie fluidique.

Le détendeur comporte un conduit interne situé sur la ligne fluidique d'alimentation ; au moins une vanne comportant une partie mobile adaptée à obturer ou non le conduit interne selon que la pression aval Pₐᵥ est supérieure ou non à la pression de consigne P_{c} ; au moins une membrane à laquelle est fixée la partie mobile, la membrane séparant, d'un côté, une zone du conduit interne située en aval de la vanne, et d'un autre côté une chambre interne.

Selon l'invention, le détendeur comporte un conduit de mise en pression raccordant la chambre interne à une zone de la ligne fluidique d'évacuation située en aval de la vanne de purge.

Certains aspects préférés, mais non limitatifs de ce système électrochimique sont les suivants.

Dans le cadre d'un procédé d'utilisation du système électrochimique, lors d'une étape de purge, le fluide présent dans la chambre interne peut contenir ledit fluide d'alimentation.

Le fluide d'alimentation peut être de l'hydrogène amené à l'anode de la pile à combustible, ou de l'oxygène pur amené à la cathode de la pile à combustible.

La valeur de la pression de consigne P_{c} du détendeur peut être fonction de la pression dans la chambre interne et donc de la position de raccord du conduit de mise en pression entre la vanne de purge et la sortie fluidique. Autrement dit, dans le cadre d'un procédé d'utilisation du système électrochimique, au préalable d'une étape de purge, une étape peut être effectuée qui consiste à ajuster une position du raccord du conduit de mise en pression entre la vanne de purge et la sortie fluidique, en fonction d'une valeur prédéfinie de la pression de consigne P_{c} du détendeur.

Le détendeur peut être un détendeur à simple détente ou à double détente.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A, déjà décrite, est une vue schématique et partielle d'un système électrochimique selon un exemple de l'art antérieur ;
la figure 1B, déjà décrite, illustre un exemple de courbe de débit d'un détendeur conventionnel, illustrant l'évolution de la pression aval Pₐᵥ en fonction du débit molaire D ;
la figure 2A est une vue schématique et partielle d'un système électrochimique selon un mode de réalisation de l'invention, dans lequel le détendeur de régulation comporte un conduit de mise à la pression de sa chambre interne, ce conduit étant raccordé à la ligne fluidique d'évacuation en aval de la vanne de purge ;
les figures 2B et 2C sont des vues schématiques et partielles, en coupe, d'un détendeur équipant le système électrochimique illustré sur la fig.2A, en configurations d'ouverture (fig.2B) et de fermeture (fig.2C) ;
la figure 3A est une vue schématique et partielle du système électrochimique illustré sur la fig.1A ; les figures 3B et 3C illustrent des exemples d'évolution de la pression et du débit molaire le long du système électrochimique illustré sur la fig.3A, lors du fonctionnement en régime nominal (fig.3B) et lors d'une étape de purge (fig.3C) ;
la figure 4A est une vue schématique et partielle du système électrochimique illustré sur la fig.2A ; les figures 4B et 4C illustrent des exemples d'évolution de la pression et du débit molaire le long du système électrochimique illustré sur la fig.4A, lors du fonctionnement en régime nominal (fig.4B) et lors d'une étape de purge (fig.4C) ;

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

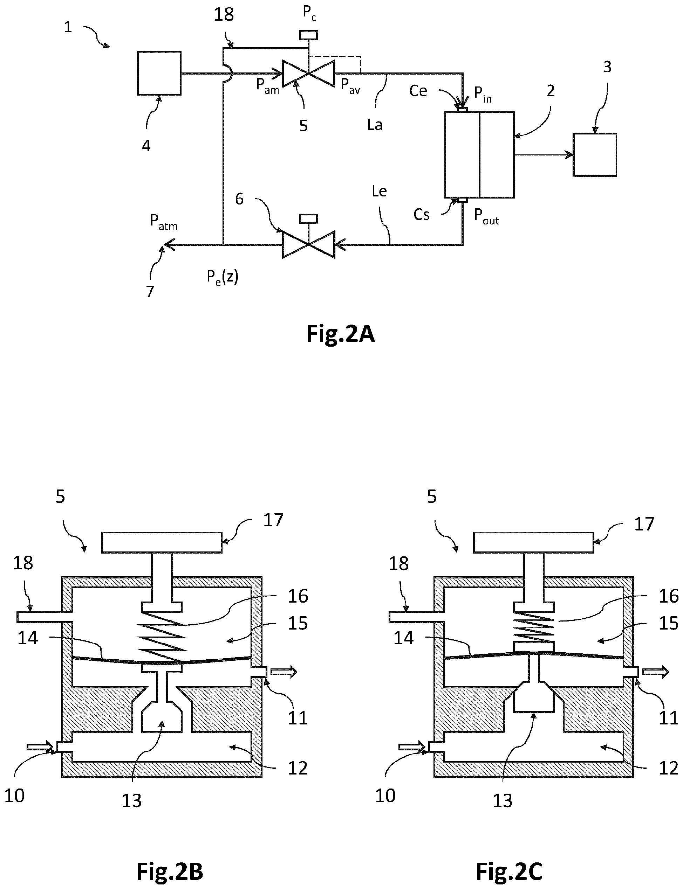

La figure 2A est une vue schématique et partielle d'un système électrochimique 1 selon un mode de réalisation de l'invention. Le système électrochimique 1 comporte *a minima* une pile à combustible 2, une vanne de purge 6 et un détendeur 5 de régulation adapté à réguler une pression d'entrée Pᵢₙ d'un fluide d'alimentation (ou fluide réactif), cette pression d'entrée Pᵢₙ étant représentative d'une pression du fluide d'alimentation à l'intérieur de la pile à combustible 2. La pression d'entrée Pᵢₙ est ici définie au niveau du collecteur d'entrée Ce de la pile à combustible.

On considérera ici en particulier le côté anode d'une pile à hydrogène, celle-ci étant alimentée en hydrogène côté anode et en air contenant de l'oxygène côté cathode. Le fluide d'alimentation est ici l'hydrogène. Cependant, l'invention s'applique également au côté cathode alimenté en oxygène pur. Par ailleurs, l'invention s'applique à tout type de pile à combustible, en particulier à celles fonctionnant à basse température, c'est-à-dire à une température inférieure à 250°C. Ainsi, d'autres fluides d'alimentation que l'hydrogène et l'oxygène peuvent être considérés.

La pile à combustible 2 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes (AME). L'anode, la membrane et la cathode sont des éléments classiques connus de l'homme du métier et ne sont donc pas décrites en détail.

Chaque assemblage est séparé de celui des cellules adjacentes par des plaques bipolaires, adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 2 comporte deux collecteurs d'entrée distincts, l'un anodique et l'autre cathodique, destinés à assurer l'injection fluidique des gaz d'alimentation jusqu'aux cellules, et deux collecteurs de sorties distincts correspondants, permettant d'évacuer les gaz d'alimentation non réagis et des espèces non réactives hors des cellules électrochimiques et de la pile à combustible 2. Ainsi, l'hydrogène est injecté dans la pile à combustible 2 par le collecteur d'entrée anodique Ce qui l'amène jusqu'aux cellules électrochimiques. L'hydrogène non réagi et les espèces non réactives, ainsi que de l'eau liquide, sont ensuite évacués par le collecteur de sortie Cs correspondant.

La pile à combustible 2 est alimentée en un fluide d'alimentation, ici en hydrogène, à partir d'une source d'hydrogène sous pression, tel qu'un réservoir 4 d'hydrogène. Celui-ci est relié au collecteur d'entrée anodique Ce par une ligne fluidique d'alimentation La sur laquelle est disposé le détendeur 5. L'hydrogène contenu dans le réservoir 4 est ainsi sous pression, par exemple à plusieurs bars ou dizaines de bars.

La pile à combustible 2 peut, en fonctionnement, subir une variation de la demande de puissance électrique instantanée. C'est le cas notamment, comme décrit dans ce mode de réalisation, lorsque la pile à combustible 2 est connectée électriquement à une charge électrique 3 qui lui impose un signal représentatif d'une puissance électrique instantanée à fournir. Dans le cas où la pile à combustible 2 fonctionne en régime dit de courant électrique imposé, la charge électrique 3 impose à la pile à combustible 2 une valeur du courant électrique à fournir qui peut varier dans le temps. A titre illustratif, la charge électrique 3 peut être une batterie électrochimique, un supercondensateur ou autre.

Aussi, un détendeur de régulation 5 est disposé sur la ligne d'alimentation La, entre le réservoir d'hydrogène 4 et le collecteur d'entrée Ce. Le détendeur 5 est adapté à maintenir une pression aval Pₐᵥ sensiblement constante, inférieure à la pression Pₐₘ de l'hydrogène en amont du détendeur 5, et ceci indépendamment des éventuelles variations de pression dans le réservoir 4. La pression aval Pₐᵥ est alors, en régime nominal, sensiblement égale à une valeur de consigne P_{c} du détendeur 5, cette valeur P_{c} pouvant être pilotée ou non. La pression aval Pₐᵥ correspond à la pression de l'hydrogène en sortie du détendeur 5, et correspond à la pression d'entrée Pᵢₙ moyennant les pertes de charge dans la ligne fluidique d'alimentation La. Le détendeur 5 impose donc la valeur de la pression aval Pₐᵥ sans contrôler la valeur du débit molaire d'hydrogène. Autrement dit, le détendeur 5 est un organe de régulation de la pression aval Pₐᵥ, c'est-à-dire qu'il est adapté à abaisser la pression du fluide à une valeur de consigne P_{c} lorsqu'il est en position d'ouverture, et à occuper une position de fermeture lorsque la pression aval Pₐᵥ est supérieure à la valeur de consigne P_{c}.

Le système électrochimique 1 comporte une ligne fluidique d'évacuation Le, reliant fluidiquement le collecteur de sortie Cs à une sortie. Une vanne de purge 6 est ici disposée sur la ligne fluidique d'évacuation Le pour permettre l'évacuation continue ou momentanée de gaz et de l'eau liquide. A titre d'exemple, la vanne de purge 6 peut assurer une évacuation faible, mais continue du gaz issu du collecteur de sortie Cs, permettant ainsi de limiter l'augmentation dans le temps de la concentration d'espèces non réactives dans la boucle de recirculation. Cependant, lors d'étapes de purge, la vanne est ouverte pour permettre l'évacuation efficace de l'eau liquide et des espèces non réactives présentes dans la pile à combustible. La ligne fluidique d'évacuation Le s'étend jusqu'à une sortie fluidique 7 où la pression du fluide d'alimentation présente une valeur constante, ici la pression atmosphérique.

L'exemple présenté ici concerne une configuration en mode bouché. Cependant, une configuration en mode ouvert est également possible (non représentée). Le système électrochimique 1 comporte alors une boucle de recirculation formée d'une part d'un éjecteur disposé sur la ligne d'alimentation La entre le détendeur et le collecteur d'entrée Ce anodique, et d'autre part d'une ligne fluidique de recirculation reliant fluidiquement le collecteur de sortie Cs anodique à une entrée dite secondaire de l'éjecteur. Un exemple d'une telle configuration est donné notamment dans le document EP3340353A1.

Les figures 2B et 2C sont des vues schématiques et partielles d'un détendeur 5 du système électrochimique 1 illustré sur la fig.2A, en configuration ouverte (fig.2B) et en configuration fermée (fig.2C). Le détendeur 5 est ici un détendeur de type à simple détente (*single stage regulator*, en anglais), mais il peut être de type à double détente (*double stage regulator*, en anglais). D'une manière générale, le détendeur 5 comporte un conduit interne 12 situé sur la ligne fluidique d'alimentation La, au moins une vanne comportant une partie mobile 13 adaptée à obturer le conduit interne 12, et au moins une membrane 14 à laquelle est fixée la partie mobile 13, qui sépare d'un côté une zone du conduit interne 12 située en aval de la partie mobile 13 et d'un autre côté une chambre interne 15. Dans le cadre de l'invention, la chambre interne 15 est portée, non pas à la pression atmosphérique comme c'est le cas habituellement, mais à la pression du fluide situé sur la ligne fluidique d'évacuation Le en aval de la vanne de purge 6, au moyen d'un conduit de mise en pression 18 (cf. également fig.2A).

Plus précisément, le détendeur 5 comporte un conduit interne 12 reliant l'entrée 10 et la sortie 11 du détendeur 5. L'entrée 10 et la sortie 11 sont situées sur la ligne fluidique d'alimentation La. Il comporte également une vanne dont une partie mobile 13 est fixée à une membrane flexible 14 délimitant une chambre interne 15, la membrane 14 étant contrainte en déplacement par un organe de rappel 16 tel qu'un ressort. Le ressort 16 est partiellement chargé au moyen ici d'un volant de commande 17 permettant de fixer la valeur de consigne P_{c}. D'autres moyens sont possibles pour charger le ressort 16, par exemple via une pression fluidique prédéfinie. La partie mobile 13 peut se déplacer ici en translation suivant un axe vertical, et comporte une zone de contact destinée à venir au contact d'une butée formée par la structure du détendeur 5 pour obturer le conduit interne 12. Il y a donc ouverture de la vanne et donc du détendeur 5 lorsque la zone de contact de la partie mobile 13 n'est pas au contact de la butée du conduit interne 12, et il y a fermeture de la vanne lorsque la zone de contact est au contact de la butée du conduit interne 12, et bloque ainsi l'écoulement de l'hydrogène dans le conduit interne 12 et donc dans la ligne fluidique d'alimentation La.

D'une manière générale, le détendeur 5 est en position d'ouverture lorsqu'il y a équilibre entre les forces suivantes (ici au premier ordre) :
- des forces dites d'ouverture, orientées ici suivant la direction -Z, qui tendent à provoquer l'ouverture de la vanne, parmi lesquelles : une force Fₒ₁ exercée par le ressort, dont l'intensité définit la pression de consigne P_{c}; et une force Fₒ₂ = P_{ci}×Sₘ exercée sur la membrane de surface Sₘ par le fluide de pression P_{ci} dans la chambre interne 15 ;
- des forces dites de fermeture, orientées ici suivant la direction +Z, qui tendent à provoquer la fermeture de la vanne, parmi lesquelles : une force F_{f1} = Pₐₘ×Sₚₘ exercée sur la partie mobile de surface Sₚₘ par le fluide de pression amont Pₐₘ dans la zone aval du conduit interne ; et une force F_{f2} = Pₐᵥ×Sₘ exercée sur la membrane 14 de surface Sₘ par le fluide de pression aval Pₐᵥ dans la zone du conduit interne 12 située en aval de la partie mobile 13.

Il s'agit ici bien entendu d'un bilan des forces au premier ordre, donné dans un but purement illustratif. D'autres forces peuvent être prises en compte, comme la force exercée sur la partie mobile par le fluide de pression aval Pₐᵥ dans la zone aval. De plus, un détendeur 5 peut évidemment comporter des organes additionnels, comme un ressort secondaire fixé à la partie mobile 13 et situé dans la zone amont. Il peut également comporter plusieurs parties mobiles et plusieurs chambres internes, dans le cas où le détendeur présente une configuration à double détente. L'exemple des fig.2B et 2C correspond en effet à un détendeur à simple détente.

Ainsi, en référence à la fig.2B qui illustre la configuration d'ouverture du détendeur 5, lorsque la pression aval Pₐᵥ reste inférieure ou égale à la pression de consigne P_{c}, la force Fₒ₁ + Fₒ₂ est supérieure ou égale à la force F_{f1} + F_{f2}. Ainsi, quelle que soit la valeur de la pression amont Pₐₘ à l'entrée 10, qui est supérieure à la pression aval Pₐᵥ et à la valeur de consigne P_{c}, la pression aval Pₐᵥ à la sortie 11 est régulée et reste sensiblement égale à la valeur de consigne P_{c}. Par ailleurs, le détendeur 5 assure la régulation de la pression aval Pₐᵥ pour une large gamme de débit molaire D lorsque celui-ci reste contenu dans la gamme de débit [D_{r,min} ; D_{r,max}] de la plage de régulation.

Par ailleurs, en référence à la figure 2C qui illustre la configuration de fermeture du détendeur 5, lorsque la pression aval Pₐᵥ est supérieure à la valeur de consigne P_{c}, la membrane 14 est repoussée et le ressort 16 chargé, ce qui se traduit par la fermeture de la vanne. Le détendeur 5 est alors en position de fermeture et bloque l'écoulement de l'hydrogène. Lorsque la pression aval Pₐᵥ tend à redevenir inférieure à la valeur de consigne P_{c}, la membrane 14 est déplacée sous l'effort exercé par le ressort 16, ce qui ouvre la vanne et autorise l'écoulement de l'hydrogène (fig.2B). La pression aval Pₐᵥ reste alors sensiblement égale à la valeur de consigne P_{c}.

Cependant, dans le cadre de l'invention, à la différence de l'art antérieur, la chambre interne 15 n'est pas portée à une pression constante de référence, comme la pression atmosphérique, mais est raccordée à la ligne fluidique d'évacuation Le en aval de la vanne de purge 6. Un conduit de mise à pression 18 assure ainsi la liaison fluidique entre la chambre interne 15 et cette partie de la ligne fluidique d'évacuation Le.

Pour mettre en évidence l'avantage lié au fait de porter la pression dans la chambre interne 15 à celle présente dans la ligne fluidique d'évacuation en aval de la vanne de pression 6, comparons l'évolution de la pression le long des lignes fluidiques du système électrochimique 1, dans le cas d'un détendeur conventionnel et dans le cas d'un détendeur du système électrochimique selon l'invention, lors d'une étape de fonctionnement en régime nominal et lors d'une étape de purge.

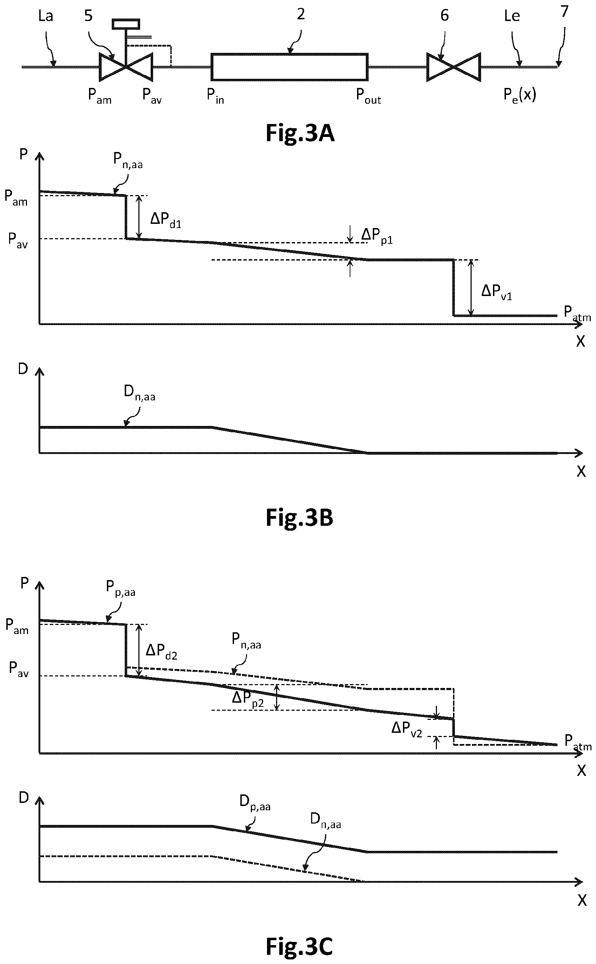

La figure 3A illustre de manière schématique et partielle le système électrochimique 1 tel qu'illustré sur la fig.1A. Il comporte donc un détendeur 5 conventionnel, ici à simple détente, dont la chambre interne 15 est portée à une pression constante, ici la pression atmosphérique. Par pression constante, on entend que la pression dans la chambre interne 15 reste constante pendant les étapes de fonctionnement en régime nominal et pendant les étapes de purge.

La figure 3B illustre, dans le cas d'un fonctionnement en régime nominal du système électrochimique 1, des exemples d'évolution de la pression et du débit molaire le long des lignes fluidiques du système électrochimique 1 illustré sur la fig.3A. La pression est ici notée P_{n,aa} et le débit est noté D_{n,aa}. La figure 3C illustre, lors d'une étape de purge, des exemples d'évolution de la pression et du débit molaire le long des lignes fluidiques du système électrochimique 1. La pression est ici notée P_{p,aa} et le débit est noté D_{p,aa}. On représente également, en traits pointillés, les évolutions P_{n,aa} et D_{n,aa}.

La pression dans la ligne fluidique d'alimentation La présente une valeur initiale qui est la pression amont Pₐₘ à l'entrée du détendeur 5. Cette valeur dépend de la pression de l'hydrogène en sortie du réservoir 4 et des pertes de charges régulières dans la ligne fluidique d'alimentation La. De plus, la pression dans la ligne fluidique d'évacuation Le présente une valeur finale, à la sortie fluidique 7, qui est une pression constante, ici égale à la pression atmosphérique. Entre ces valeurs initiale et finale, la pression de l'hydrogène évolue en fonction des pertes de charges singulières et régulières, et en fonction de la consommation d'hydrogène dans la pile à combustible 2.

En référence à la fig.3B, en fonctionnement en régime nominal, l'hydrogène arrive à l'entrée du détendeur 5 avec une pression amont Pₐₘ. La pression chute brutalement d'une valeur ΔP_{d1} dans le détendeur 5 du fait de pertes de charges singulières. Elle diminue ensuite lentement jusqu'à l'entrée de la pile à combustible 2, où elle diminue encore du fait des pertes de charges dans la pile à combustible et de la consommation d'hydrogène (diminution de ΔPₚ₁, qui reste faible dans la mesure où le débit molaire n'y est pas élevé). Elle reste ensuite constante jusqu'à la vanne de purge 6, où elle chute ensuite à la pression atmosphérique. Cette chute de pression dans la vanne de purge 6 n'est pas liée aux pertes de charges dans la mesure où le débit molaire y est nul, mais correspond à la différence entre la pression constante en sortie de la pile à combustible 2 (dans la mesure où le débit molaire est nul), et la pression atmosphérique en aval de la vanne de purge 6. En termes de débit molaire, l'hydrogène présente un débit molaire constant dans la ligne fluidique d'alimentation La, puis diminue dans la pile à combustible 2 dans la mesure où il y est consommé. En sortie de la pile à combustible 2, le débit molaire est nul dans la mesure où il a été entièrement consommé (et il est nul dans la mesure où la vanne de purge 6 est fermée).

En référence à la fig.3C, lors d'une étape de purge, l'hydrogène présente un débit molaire en amont de la pile à combustible 2 qui est plus important qu'en fonctionnement en régime nominal. Il diminue dans la pile à combustible 2 car il y est consommé, puis présente une valeur finale constante et non nulle dans la ligne fluidique d'évacuation Le, correspondant au débit de purge. En termes de pression, l'hydrogène arrive à l'entrée du détendeur 5 avec toujours la même pression amont Pₐₘ. La chute de pression au sein du détendeur 5 présente maintenant une valeur ΔP_{d2} supérieure à la valeur précédente ΔP_{d1} dans la mesure où le débit molaire est plus important (cf. par ex. l'équation de Darcy-Weisbach dans le cas d'un fluide incompressible qui montre la relation entre la perte de charge et le débit du fluide). La pression diminue ensuite progressivement, en présentant une diminution ΔPₚ₂ supérieure à ΔPₚ₁ dans la pile à combustible 2 dans la mesure où le débit molaire y est plus important, puis une chute de pression ΔPᵥ₂ dans la vanne de purge 6 du fait ici de pertes de charges singulières. Elle diminue ensuite progressivement jusqu'à la valeur finale Pₐₜₘ égale à la pression atmosphérique.

Il en résulte que la pression aval Pₐᵥ, du fait de la chute de pression ΔP_{d2} qui est plus élevée lors de l'étape de purge, diminue fortement, et provoque donc une diminution de la pression Pᵢₙ à l'entrée anodique de la pile à combustible 2 par rapport au fonctionnement en régime nominal. La pression Pₒᵤₜ à la sortie anodique de la pile à combustible 2 a donc diminué « deux fois » par rapport au fonctionnement en régime nominal : d'une part car la pression d'entrée Pᵢₙ a diminué, et d'autre part car les pertes de charges ΔPₚ₂ ont augmenté (car le débit molaire a augmenté). Aussi, on comprend que cette diminution de la pression aval Pₐᵥ lors de l'étape de purge, et *a fortiori* l'entrée du détendeur 5 dans la direction de sa zone de débit critique, va conduire à une diminution de la pression dans la pile à combustible. Cette diminution est susceptible de provoquer une dégradation des propriétés et des performances de la pile à combustible, par exemple du fait d'un déséquilibre de pression entre le côté anodique et le côté cathodique des membranes électrolytiques des cellules électrochimiques.

Pour éviter cette situation, le détendeur 5 du système électrochimique 1 selon l'invention présente une chambre interne 15 raccordée à la ligne fluidique d'évacuation Le en aval de la vanne de purge 6, et donc portée à la pression locale d'évacuation Pₑ(x) par le conduit de mise en pression 18.

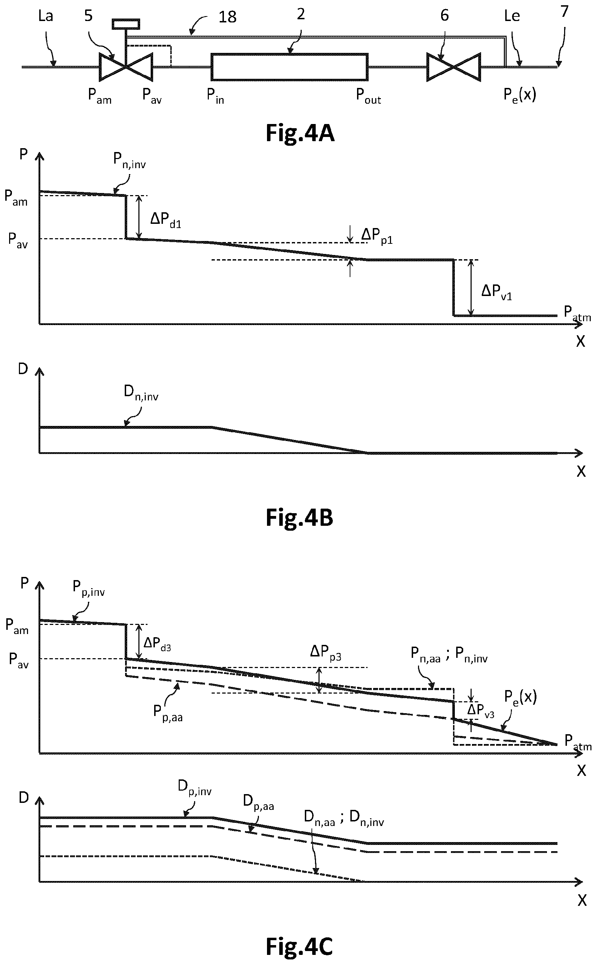

La figure 4A illustre de manière schématique et partielle le système électrochimique 1 tel qu'illustré sur la fig.2A. Il comporte donc un détendeur 5, ici à simple détente, dont la chambre interne 15 est portée à une pression variable égale à la pression d'évacuation Pₑ(x) de la ligne fluidique d'évacuation Le en aval de la vanne de purge 6. Par pression variable, on entend que la pression dans la chambre interne 15 présente une valeur différente lors des étapes de purge vis-à-vis de sa valeur lors des étapes de fonctionnement en régime nominal. Dans ces exemples, le système électrochimique 1 fonctionne en mode bouché, mais il pourrait fonctionner en mode ouvert avec recirculation d'hydrogène.

La figure 4B illustre, dans le cas d'un fonctionnement en régime nominal du système électrochimique 1, des exemples d'évolution de la pression et du débit molaire le long des lignes fluidiques du système électrochimique 1 illustré sur la fig.4A. La pression est ici notée P_{n,inv} et le débit est noté D_{n,inv}.

Ce fonctionnement est ici identique à celui décrit précédemment en référence à la fig.3B. En effet, la pression d'évacuation Pₑ(x) étant égale à la pression atmosphérique en aval de la vanne de purge 6, la chambre interne 15 est portée à la pression atmosphérique. Le système électrochimique 1 selon l'invention présente donc un fonctionnement en régime nominal qui reste inchangé par rapport au système électrochimique 1 utilisant un détendeur conventionnel.

La figure 4C illustre, lors d'une étape de purge, des exemples d'évolution de la pression et du débit molaire le long des lignes fluidiques du système électrochimique 1. La pression est ici notée P_{p,inv} et le débit est noté D_{p,inv}. On représente également les évolutions P_{n,aa} et D_{n,aa} relatifs à un détendeur conventionnel en régime nominal (traits pointillés longs), ainsi que les évolutions P_{p,inv} et D_{p,inv} relatifs à l'étape de purge (traits pointillés courts).

Lors de cette étape de purge, l'hydrogène arrive à l'entrée du détendeur 5 avec toujours la même pression amont Pₐₘ. La chute de pression au sein du détendeur 5 présente maintenant une valeur ΔP_{d3} plus faible que la valeur précédente ΔP_{d2} lors de la purge avec un détendeur conventionnel (et ici inférieure égale à la valeur ΔP_{d1} du régime nominal) dans la mesure où la force Fₒ₂ exercée sur la membrane 14 par le fluide dans la chambre interne 15, ici de pression Pₑ(x), est supérieure à la pression atmosphérique. Autrement dit, cela revient, d'une certaine manière, à augmenter la pression de consigne P_{c} du détendeur 5 uniquement lors de l'étape de purge. On aurait donc, lors du régime nominal, une première valeur de consigne définie par la raideur du ressort et par la pression atmosphérique dans la chambre interne 15, et lors de l'étape de purge, une deuxième valeur de consigne, supérieure à la première, définie par la raideur du ressort et par la pression Pₑ(x) dans la chambre interne 15 (supérieure à la pression atmosphérique). La pression aval Pₐᵥ en sortie du détendeur 5 est donc supérieure à ce qu'elle était dans la fig.3C (cf. courbe P_{p,aa}). La pression diminue ensuite progressivement dans la ligne fluidique d'alimentation La, puis dans la pile à combustible 2, puis dans la ligne fluidique d'évacuation Le de la pile à combustible 2. Elle présente ensuite une chute de pression ΔPᵥ₃ dans la vanne de purge 6 qui peut être du même ordre de grandeur que ΔPᵥ₂ (voire légèrement supérieure car le débit est plus important), puis diminue progressivement jusqu'à la pression atmosphérique à la sortie fluidique 7.

On voit sur la fig.4C que la pression de l'hydrogène dans la pile à combustible 2 présente des valeurs d'entrée Pᵢₙ et de sortie Pₒᵤₜ qui sont supérieures à ce qu'elles étaient dans la fig.3C (cf. la courbe P_{p,inv} comparée à la courbe P_{p,aa}). Elle peut redevenir sensiblement égale à la valeur de la consigne Pc de pression d'entrée cathodique, de sorte que l'assemblage membrane électrodes ne présente sensiblement pas de contraintes mécaniques liées à une diminution de pression lors des phases de purge. On atténue ainsi, voire annule, la chute de pression dans la pile à combustible 2 liée à l'augmentation du débit molaire lors de l'étape de purge. On remarque en effet qu'ici la courbe P_{p,inv} dans la pile à combustible 2 présente des valeurs proches de celles de la courbe P_{n,inv}, ce qui montre que la pression dans la pile à combustible 2 n'est plus fortement diminuée lors de la purge, comme c'est le cas dans l'exemple de l'art antérieur. Les risques de dégradation des propriétés et performances de la pile à combustible peuvent donc être limités, voire écartés. En termes de débit molaire, notons qu'il est ici plus élevé que dans le cas de la fig.3C (cf. courbe D_{p,inv} comparée à la courbe D_{p,aa}), dans la mesure où la différence de pression entre la pression aval Pₐᵥ et la pression atmosphérique à la sortie fluidique 7 a augmenté.

Par ailleurs, la position de raccord du conduit 18 sur la ligne d'évacuation Le peut être définie de telle manière à inverser la situation : c'est-à-dire que la pression aval Pₐᵥ lors d'une phase de purge soit augmentée par rapport au cas de la fig. De cette manière, les purges sont réalisées de manière plus efficace mais des contraintes mécaniques restent exercées sur la membrane lors de phases de purges, cependant ces contraintes sont exercées dans un sens opposé au cas de la fig.3B.

Notons également que le gaz présent dans la chambre interne 15 contient le même gaz d'alimentation (ici l'hydrogène) qui circule dans le conduit interne 12 et dans les lignes fluidiques d'alimentation La et d'évacuation Le. Aussi, dans le cas où la membrane 14 du détendeur 5 présenterait des fuites ou même une rupture, le fluide d'alimentation serait évacué dans la ligne fluidique d'évacuation La via le conduit de mise en pression 18, et non pas évacué dans l'environnement du système électrochimique 1 comme dans le cas de la fig.1A. Aussi, le système électrochimique 1 selon l'invention présente une sécurité renforcée.

Le détendeur 5 du système électrochimique 1 présente l'avantage supplémentaire d'avoir une dynamique de régulation performante dans la mesure où le temps de réponse du détendeur 5 lors du passage de l'étape en fonctionnement nominal à l'étape de purge est très faible et quasi-immédiat. Il n'y a pas en effet de pilotage contrôlé de la valeur de consigne P_{c}, qui pourrait augmenter le temps de réponse de la régulation.

Des modes de réalisation particuliers viennent d'être décrits. Différentes variantes et modifications apparaîtront à l'homme du métier.

Ainsi, la position du raccord entre le conduit de mise en pression et la ligne fluidique d'évacuation peut être ajustée en fonction de l'intensité de la compensation de régulation à appliquer, autrement dit en fonction de la valeur de la pression Pₑ(x) à imposer à la chambre interne. Cette valeur Pₑ(x) est ainsi plus élevée lorsque le raccord est positionné à proximité de la vanne de purge, ou est plus faible lorsqu'il est éloigné de la vanne de purge.

De plus, le conduit d'évacuation en aval de la vanne de purge peut être dimensionné en fonction d'un équilibre entre l'intensité de la compensation de régulation à appliquer lors de l'étape de purge d'une part (perte de charge élevée dans le conduit d'évacuation, mais conduisant à un débit molaire réduit), et le débit molaire suffisant pour évacuer efficacement l'eau liquide présent dans la pile à combustible (perte de charge faible pour avoir un débit molaire élevé).

## Revendications

1. Système électrochimique (1), comportant :
o une pile à combustible (2), comportant un collecteur d'entrée (Ce) et un collecteur de sortie (Cs) adaptés à assurer un écoulement d'un fluide d'alimentation dans la pile à combustible (2) ;
o une source (4) dudit fluide d'alimentation, raccordé au collecteur d'entrée (Ce) par une ligne fluidique d'alimentation (La) ;
o une sortie fluidique (7), raccordée au collecteur de sortie (Cs) par une ligne fluidique d'évacuation (Le), et destinée à être portée à une pression de sortie constante ;
o un détendeur (5), disposé sur la ligne fluidique d'alimentation (La), adapté à réguler, en fonction d'une pression de consigne P_{c}, une pression aval Pₐᵥ du fluide d'alimentation en sortie du détendeur (5) et donc une pression d'entrée du fluide d'alimentation dans la pile à combustible (2), et comportant :
• un conduit interne (12) situé sur la ligne fluidique d'alimentation (La) ;
• au moins une vanne comportant une partie mobile (13) adaptée à obturer ou non le conduit interne (12) selon que la pression aval Pₐᵥ est supérieure ou non à la pression de consigne P_{c} ;
• au moins une membrane (14) à laquelle est fixée la partie mobile (13), la membrane (14) séparant, d'un côté, une zone du conduit interne (12) située en aval de la vanne, et d'un autre côté une chambre interne (15) ;
o une vanne de purge (6), disposée sur la ligne fluidique d'évacuation (Le) entre le collecteur de sortie (Cs) et la sortie fluidique (7) ;
o **caractérisé en ce que** le détendeur (5) comporte un conduit de mise en pression (18) raccordant la chambre interne (15) à une zone de la ligne fluidique d'évacuation (Le) située en aval de la vanne de purge (6).

2. Système électrochimique (1) selon la revendication 1, dans lequel le fluide d'alimentation est de l'hydrogène amené à l'anode de la pile à combustible (2).

3. Système électrochimique (1) selon l'une quelconque des revendications 1 à 2, dans lequel le détendeur (5) est un détendeur à simple détente ou à double détente.

4. Procédé d'utilisation d'un système électrochimique selon l'une quelconque des revendications 1 à 3, comportant une étape de purge au cours de laquelle le fluide présent dans la chambre interne (15) contient ledit fluide d'alimentation.

5. Procédé d'utilisation selon la revendication 4, comportant, au préalable d'une étape de purge, une étape d'ajustement d'une position du raccord du conduit de mise en pression (18) entre la vanne de purge (6) et la sortie fluidique (7), en fonction d'une valeur prédéfinie de la pression de consigne P_{c} du détendeur (5).

## Patentansprüche

1. Elektrochemisches System (1), umfassend:
o eine Brennstoffzelle (2), umfassend einen Einlasskollektor (Ce) und einen Auslasskollektor (Cs), die geeignet sind, ein Fließen eines Zuführungsfluids in der Brennstoffzelle (2) zu gewährleisten;
o eine Quelle (4) des Zuführungsfluids, die mit dem Einlasskollektor (Ce) über eine fluidische Zuführungsleitung (La) verbunden ist;
o einen Fluidauslass (7), der mit dem Auslasskollektor (Cs) über eine fluidische Abführungsleitung (Le) verbunden ist und dazu bestimmt ist, auf einen konstanten Auslassdruck gebracht zu werden;
o einen an der fluidischen Zuführungsleitung (La) angeordneten Druckminderer (5), der geeignet ist, in Abhängigkeit von einem Solldruck P_{c} einen stromabwärtigen Druck Pₐᵥ des Zuführungsfluids im Auslass des Druckminderers (5) und somit einen Einlassdruck des Zuführungsfluids in der Brennstoffzelle (2) zu regulieren, und umfassend:
• einen inneren Kanal (12), der an der fluidischen Zuführungsleitung (La) gelegen ist;
• mindestens ein Ventil, das einen beweglichen Teil (13) umfasst, der geeignet ist, den inneren Kanal (12) je nachdem, ob der stromabwärtige Druck Pₐᵥ über dem Solldruck P_{c} liegt oder nicht, zu verschließen oder nicht;
• mindestens eine Membran (14), an welcher der bewegliche Teil (13) befestigt ist, wobei die Membran (14) auf einer Seite einen stromab des Ventils gelegen Bereich des inneren Kanals (12) und auf der anderen Seite eine innere Kammer (15) trennt;
o ein Spülventil (6), das an der fluidischen Abführungsleitung (Le) zwischen dem Auslasskollektor (Cs) und dem Fluidauslass (7) angeordnet ist;
o **dadurch gekennzeichnet, dass** der Druckminderer (5) einen Druckbeaufschlagungskanal (18) umfasst, der die innere Kammer (15) mit einem stromab des Spülventils (6) gelegenen Bereich der fluidischen Abführungsleitung (Le) verbindet.

2. Elektrochemisches System (1) nach Anspruch 1, bei dem das Zuführungsfluid Wasserstoff ist, welcher zur Anode der Brennstoffzelle (2) geführt wird.

3. Elektrochemisches System (1) nach einem der Ansprüche 1 bis 2, bei dem der Druckminderer (5) ein einstufiger oder zweistufiger Druckminderer ist.

4. Verfahren zur Verwendung eines elektrochemischen Systems nach einem der Ansprüche 1 bis 3, umfassend einen Spülschritt, in dessen Verlauf das in der inneren Kammer (15) vorhandene Fluid das Zuführungsfluid enthält.

5. Verfahren zur Verwendung nach Anspruch 4, umfassend, vor einem Spülschritt, einen Schritt des Anpassens einer Position des Anschlusses des Druckbeaufschlagungskanals (18) zwischen dem Spülventil (6) und dem Fluidauslass(7) in Abhängigkeit von einem vorgegebenen Wert des Solldrucks P_{c} des Druckminderers (5).

## Claims

1. Electrochemical system (1), having:
o a fuel cell (2), having an inlet manifold (Ce) and an outlet manifold (Cs) that are designed to ensure a flow of a supply fluid through the fuel cell (2);
o a source (4) of said supply fluid, connected to the inlet manifold (Ce) by a fluidic supply line (La);
o a fluidic outlet (7), connected to the outlet manifold (Cs) by a fluidic discharge line (Le), and intended to be brought to a constant outlet pressure;
o a regulator (5), disposed on the fluidic supply line (La), designed to regulate, as a function of a setpoint pressure P_{c}, a downstream pressure Pₐᵥ of the supply fluid at the outlet of the regulator (5) and therefore an inlet pressure of the supply fluid in the fuel cell (2), and having:
• an internal duct (12) situated on the fluidic supply line (La);
• at least one valve having a mobile part (13) designed to shut off or not shut off the internal duct (12) depending on whether or not the downstream pressure Pₐᵥ is greater than the setpoint pressure P_{c};
• at least one membrane (14) to which is fastened the mobile part (13), the membrane (14) separating, on one side, a zone of the internal duct (12) that is situated downstream of the valve, and on the other side an internal chamber (15);
o a purge valve (6), disposed on the fluidic discharge line (Le) between the outlet manifold (Cs) and the fluidic outlet (7);
o **characterized in that** the regulator (5) has a pressurisation duct (18) connecting the internal chamber (15) to a zone of the fluidic discharge line (Le) that is situated downstream of the purge valve (6).

2. Electrochemical system (1) according to Claim 1, wherein the supply fluid is hydrogen conveyed to the anode of the fuel cell (2).

3. Electrochemical system (1) according to either one of Claims 1 and 2, wherein the regulator (5) is a single stage regulator or a double stage regulator.

4. Method for using an electrochemical system according to any one of Claims 1 to 3, involving a purge step during which the fluid present in the internal chamber (15) contain said supply fluid.

5. Use method according to Claim 4, involving, prior to a purge step, a step of adjusting a position of the connection of the pressurisation duct (18) between the purge valve (6) and the fluidic outlet (7), as a function of a predefined value of the setpoint pressure P_{c} of the regulator (5).
